Europäisches Patentamt

European Patent Office

Office européen des brevets

(19)

(11) Veröffentlichungsnummer: **0 135 889**
**B1**

(12) **EUROPÄISCHE PATENTSCHRIFT**

(45) Veröffentlichungstag der Patentschrift:
29.11.89

(51) Int. Cl.⁴: **H 02 M 3/07**

(21) Anmeldenummer: **84110892.1**

(22) Anmeldetag: **12.09.84**

(54) Schaltung zur Spannungsvervielfachung.

(30) Priorität: **29.09.83 DE 3335423**

(43) Veröffentlichungstag der Anmeldung:
**03.04.85 Patentblatt 85/14**

(45) Bekanntmachung des Hinweises auf die Patenterteilung:
**29.11.89 Patentblatt 89/48**

(84) Benannte Vertragsstaaten:
**AT BE CH DE FR GB IT LI NL SE**

(56) Entgegenhaltungen:
**DE-A- 2 259 257**
**DE-B- 2 525 057**

**IEEE JOURNAL OF SOLID-STATE CIRCUITS, Band
SC-17, Nr. 4, 4. August 1982, Seiten 778-783, New York,
US; S. SINGER "Inductance-less up dc-dc convertor"**

(73) Patentinhaber: **Siemens Aktiengesellschaft,
Wittelsbacherplatz 2, D-8000 München 2 (DE)**

(72) Erfinder: **Mauthe, Manfred, Dipl.-Ing.,
Therese-Giehse-Allee 44, D-8000 München 83 (DE)**

**Beschreibung**

Die Erfindung bezieht sich auf eine Schaltung zur Spannungsvervielfachung nach dem Oberbegriff des Patentanspruchs 1.

Eine solche Schaltung ist aus dem IEEE Journ. of Solid State Circuits, Vol. SC-17, No. 4, Aug. 1982, S. 778–781, bekannt. Hier ist der Taktspannungserzeuger, der die Taktspannung zur Ansteuerung der Schalttransistoren liefert, nur so lange mit der Versorgungsspannung verbunden, als die Ausgangsspannung die Versorgungsspannung nicht übersteigt. Sobald jedoch die Ausgangsspannung größer ist als die Versorgungsspannung, wird der Taktspannungserzeuger von der letzteren auf die erstere umgeschaltet, so daß die Taktspannungen etwa zwischen 0 Volt und der Amplitude der Ausgangsspannung alternieren, was notwendig ist, um zu verhindern, daß der Wirkungsgrad der Schaltung durch unvollkommen gesperrte Schalttransistoren zu stark verringert wird. Die Abschaltung des Taktspannungserzeugers von der Versorgungsspannung erfolgt dabei mittels einer Diode, die in Serie zum Versorgungsspannungseingang angeordnet ist. Nachteilig ist dabei, daß an der im Durchlaßzustand betriebenen Diode eine Schwellwertspannung abfällt, durch die die effektive Versorgungsspannung verringert wird. Das ist insbesondere dann störend, wenn die Versorgungsspannung relativ klein ist, da der Wirkungsgrad der Schaltung hierdurch entsprechend stark herabgesetzt wird.

Der Erfindung liegt die Aufgabe zugrunde, eine Schaltung der eingangs genannten Art anzugeben, bei der dieser Nachteil nicht auftritt. Das wird erfindungsgemäß bei einer Ausbildung der Schaltung nach dem kennzeichnenden Teil des Patentanspruchs 1 erreicht.

Der mit der Erfindung erzielbare Vorteil liegt insbesondere darin, daß die volle Versorgungsspannung zum Betrieb des spannungsvervielfachenden Schaltungsteils zur Verfügung steht und gleichzeitig eine sichere Ansteuerung der Schalttransistoren und insbesondere eine sichere Sperrung derselben gewährleistet ist.

Die Ansprüche 2 bis 5 sind auf vorteilhafte Ausgestaltungen und Weiterbildungen der Erfindung gerichtet.

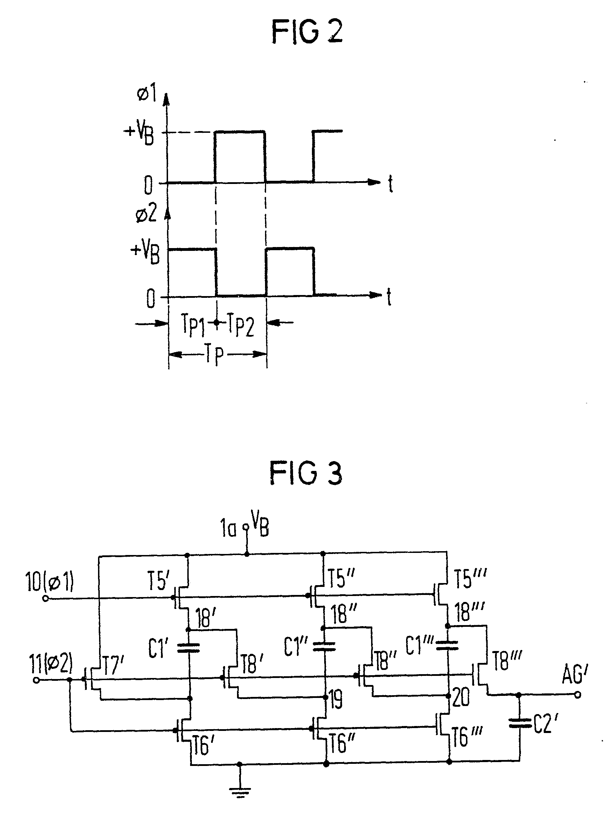

Eine Ausgestaltung der Schaltung gemäß Figur 3, wobei die Spannung am Speicherkondensator auf etwa den vierfachen Wert angehoben wird ist auch aus der deutschen Offenlegungsschrift DE-A 2 259 257 bekannt.

Die Erfindung wird nachfolgend anhand der Zeichnung näher erläutert. Dabei zeigt:

Fig. 1 eine bevorzugte Ausführungsform der erfindungsgemäßen Schaltung in CMOS-Technologie,

Fig. 2 Spannungs-Zeit-Diagramme zur Erläuterung der Schaltung nach Fg. 1, und

Fig. 3 eine Weiterbildung der Schaltung nach Fig. 1.

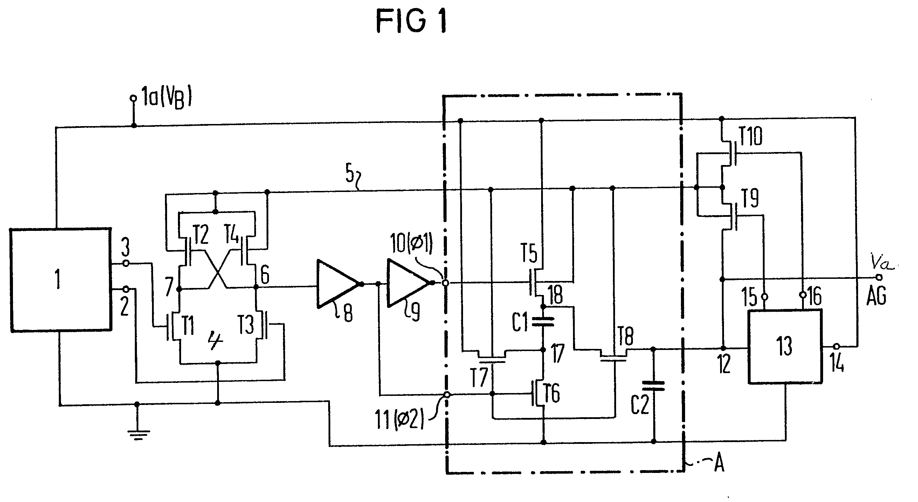

In Fig. 1 ist ein mit der Versorgungsspannung $V_B$ beaufschlagter Rechteckspannungserzeuger 1 vorgesehen, der an einem ersten Ausgang 2 eine zwischen dem Bezugspotential und $V_B$ alternierende Rechteckspannung und an einem zweiten Ausgang 3 eine zu dieser invertierte Rechteckspannung abgibt. Ein Pegelumsetzer 4 weist einen aus zwei in Serie zueinander liegenden Transistoren T1 und T2 bestehenden Schaltzweig auf, der endseitig mit einer Versorgungsleitung 5 und dem Bezugspotential der Schaltung verbunden ist, während ein zweiter, zu dem ersten parallel liegender Schaltzweig die Serienschaltung zweiter Schalttransistoren T3 und T4 enthält. Dabei sind T2 und T4 als P-Kanal-Transistoren ausgebildet, T1 und T3 dagegen als N-Kanal-Transistoren. Das Gate von T2 ist an den Schaltungsknoten 6 geführt, über den T3 und T4 miteinander verbunden sind, während das Gate von T4 mit dem Schaltungsknoten 7 beschaltet ist, über den T1 und T2 miteinander verbunden sind.

Vom Schaltungsknoten 6 gelangt man an den Eingang eines Inverters 8, dem sich ein zweiter Inverter 9 anschließt. Der Ausgang von 9 ist mit einem ersten Takteingang 10 eines Schaltungsteils A verbunden, der in Fig. 1 von einer strichpunktierten Linie umgeben ist. Der Ausgang von 8 ist an einen zweiten Takteingang 11 von A geführt. Der Schaltungsteil A enthält eine Kapazität C1, deren erster Anschluß 18 über einen P-Kanal-Schalttransistor T5 mit der Versorgungsspannung $V_B$ beschaltet ist, während ihr zweiter Anschluß 17 über einen N-Kanal-Schalttransistor T6 auf das Bezugspotential der Schaltung gelegt ist. Weiterhin ist der zweite Anschluß von C1 über einen P-Kanal-Schalttransistor T7 an die Versorgungsspannung $V_B$ gelegt, während der erste Anschluß 18 von C1 über einen P-Kanal-Schalttransistor T8 mit dem ersten Anschluß einer Speicherkapazität C2 verbunden ist, deren zweiter Anschluß auf Bezugspotential liegt. Das Gate von T5 liegt am Takteingang 10, während die Gateelektroden von T6, T7 und T8 mit dem Takteingang 11 verbunden sind. Der erste Anschluß von C2, der auch den Schaltungsausgang AG bildet, ist mit dem ersten Eingang 12 eines Komparators 13 verbunden, dessen zweiter Eingang 14 mit $V_B$ beschaltet ist. Über den ersten Ausgang 15 von 13 wird das Gate eines Schalttransistors T9 angesteuert, über den zweiten Ausgang 16 von 13 das Gate eines Schalttransistors T10. Dabei verbindet die Source-Drain-Strecke von T9 die Versorgungsleitung 5 mit dem Schaltungsausgang AG, die Source-Drain-Strecke von T10 die Versorgungsleitung 5 mit der Versorgungsspannung $V_B$.

Wie bereits angedeutet, werden an den Ausgängen 2 und 3 des Rechteckspannungserzeugers 1 zueinander invertierte, jeweils zwischen 0 Volt und $+V_B$ alternierende Rechteckspannungen abgegriffen. Befindet sich in der ersten Hälfte $T_{P1}$ einer Taktperiode $T_p$ der Ausgang 3 auf 0 Volt und der Ausgang 2 auf $+V_B$, so sperrt T1, während T3 leitet. Damit werden der Knoten 6 sowie das Gate von T2 auf 0 Volt heruntergezogen, was zur Folge hat, daß T2, der ja als P-Kanal-Transistor ausgebildet ist, leitet. Der Knoten 7 liegt dabei auf dem Potential der Versorgungsleitung 5, die zunächst über den leitenden Transistor T10 (bei gesperrtem Transistor T9) mit der Versorgungsspannung $V_B$ beschaltet ist. Daher befindet sich der P-Kanal-Schalttransistor T4 im gesperrten Zustand. In der zweiten Hälfte $T_{P2}$ der Taktperiode $T_P$ liegt dann der Ausgang 2 auf 0 Volt und der Ausgang 3 auf $+V_B$. Damit wird der Knoten 7 auf 0 Volt gezogen, so daß T4 leitet, der Knoten 6 auf das Potential der Versorgungsleitung 5, d.h. also im betrachteten Fall $+V_B$, angehoben wird und T2 sperrt. Am Knoten 6 ergibt sich hieraus eine Rechteckspannung, die im Takte der Rechteckspannungen an 2 und 3 zwischen der jeweiligen Spannung an der Versorgungsleitung und 0 Volt alterniert. Diese Rechteckspannung wird über die beiden Inverter 8 und 9 dem Takteingang 10 als Taktimpulsspannung Φ1 zugeführt. Andererseits wird am Ausgang des Inverters 8 die invertierte Rechteckspannung abgegriffen und als Taktimpulsspannung Φ2 an den Takteingang 11 gelegt. Die Teile 1, 4, 8 und 9 bilden den Taktspannungserzeuger der Schaltung nach der Erfindung.

Fig. 2 zeigt den zeitlichen Verlauf der Taktimpulsspannungen Φ1 und Φ2 über einer Taktperiode $T_P$.

In der ersten Hälfte $T_{P1}$ der Taktperiode $T_P$ beträgt der Amplitudenwert von Φ1 etwa 0 Volt, während Φ2 einen Amplitudenwert von $+V_B$ aufweist, solange 5 an $+V_B$ liegt. Dabei wird das Gate des P-Kanal-Schalttransistors T5 auf 0 Volt gelegt, so daß dieser leitet. Ebenso leitet dann der N-Kanal-Schalttransistor T6, dessen Gate mit $+V_B$ beaufschlagt wird, während die P-Kanal-Schalttransistoren T7 und T8 wegen ihrer auf $+V_B$ gelegten Gateelektrode sperren. Das hat zur Folge, daß sich die Kapazität C1 über T5 und T6 etwa auf die Versorgungsspannung $+V_B$ auflädt. In der zweiten Takthalbperiode $T_{P2}$ beträgt dagegen der Amplitudenwert von Φ2 etwa 0 Volt, während der Amplitudenwert von Φ1 etwa $+V_B$ entspricht. Dabei wird der zweite Anschluß 17 von C1 über den leitenden P-Kanal-Schalttransistor T7 mit der Versorgungsspannungsquelle 1a verbunden, d.h. auf $+V_B$ angehoben, während der erste Anschluß 18 von C1 über den in gleicher Weise angesteuerten, leitenden P-Kanal-Schalttransistor T8 mit dem ersten Anschluß von C2 verbunden ist. Da der zweite Anschluß von C2 auf Bezugspotential liegt, ergibt sich eine Serienschaltung von $+V_B$ und der an C1 liegenden Spannung, wobei die Speicherkapazität C2 etwa auf die Summenspannung, d.h. $+2V_B$, aufgeladen wird. T5 und T6 sind während der Takthalbperiode $T_{P2}$ gesperrt.

Ganz allgemein gilt, daß in jeder ersten Takthalbperiode mit Φ1 = 0, Φ2 = $+V_B$ eine Aufladung von C1 auf den Wert von $+V_B$ erfolgt, während in jeder folgenden zweiten Takthalbperiode $T_{P2}$ mit Φ1 = $+V_B$, Φ2 = 0 die Summenspannung von $+V_B$ und der an C1 anliegenden Spannung zu einer Nachladung von C2 auf den Wert von etwa $+2V_B$ führt. C2 entlädt sich über einen bei AG angeschlossenen Verbraucher, wobei in jeder zweiten Takthalbperiode der durch diese Entladung in C2 entstandene Ladungsverlust wieder ausgeglichen wird.

Sobald die Spannung am Schaltungsausgang AG den Wert von $+V_B$ übersteigt, wird die Versorgungsleitung 5 von $+V_B$ auf die Spannung $V_a$ am Ausgang AG umgeschaltet. Dies geschieht in der Weise, daß der Komparator 13, der die an seinem Eingang 12 liegende Spannung $V_a$ mit der am Eingang 14 liegenden Spannung $+V_B$ vergleicht, für den Fall $V_a < V_B$ an seinem Ausgang 16 eine logische «0» abgibt, am Ausgang 15 dagegen eine logische «1», während für den Fall $V_a > V_B$ am Ausgang 15 eine logische «0» und am Ausgang 16 eine logische «1» auftreten. Dabei bedeutet eine logische «0» das Bezugspotential, eine logische «1» das jeweils an der Versorgungsleitung 5 auftretende Potential. Die logische «0» am Ausgang 16 schaltet den P-Kanal-Transistor T10 in den leitenden Zustand, die logische «0» am Ausgang 15 den P-Kanal-Transistor T9. Durch den Komparator 13 ist sichergestellt, daß sich jeweils nur einer der Transistoren T9 und T10 im leitenden Zustand befindet. Die Umschaltung der Versorgungsleitung 5 auf die Spannung $V_a$ bewirkt im Pegelumsetzer 4, daß die am Schaltungsknoten 6 auftretende Rechteckspannung nicht mehr wie vorher beschrieben zwischen 0 Volt und $+V_B$ alterniert, sondern zwischen 0 Volt und $V_a$, so daß auch die an den Takteingängen 10 und 11 liegenden Taktimpulsspannungen Φ1 und Φ2 zwischen diesen Werten alternieren. Damit wird erreicht, daß die Schalttransistoren T5 und T6 in den zweiten Takthalbperioden $T_{P2}$ sicher sperren, so daß keine unerwünschten Ladungsverluste an C1 und C2 auftreten können, die den Wirkungsgrad der Schaltung verringern würden.

Fig. 3 zeigt eine Weiterbildung des mit A bezeichneten Schaltungsteils von Fig. 1, die anstelle von A in die Schaltung nach Fig. 1 eingesetzt wird, wenn am Ausgang AG eine höhere Spannung erwünscht ist als $+2V_B$. Im linken Teil der Fig. 3 ist eine erste Schaltungsstufe mit den Teilen C1' und T5' bis T8' erkennbar, die dem Schaltungsteil A nach Aufbau und Wirkungsweise entspricht. Lediglich anstelle der Speicherkapazität C2 ist hier eine zweite, gleichartig aufgebaute Schaltungsstufe angefügt, die aus den Teilen C1'', T5'', T6'' und T8'' besteht. Ein Schalttransistor T7'' entfällt, da der Eingang 19 der zweiten Schaltungsstufe nicht mit $V_B$ sondern mit dem ersten Anschluß 18' von C1' verbunden ist, und zwar über den Schalttransistor T8'. An die zweite Schaltungsstufe schließt sich eine weitere, gleichartig ausgebildete Schaltungsstufe an, die die Teile C1''', T5''', T6''' und T8''' aufweist. T7''' entfällt, da der Eingang 20 der dritten Schaltungsstufe nicht mit $V_B$, sondern über den Schalttransistor T8'' mit dem ersten Anschluß 18'' von C1'' verbunden ist. Der erste Anschluß 18''' von C1''' ist über den Schalttransistor T8''' mit dem ersten Anschluß einer Speicherkapazität C2' beschaltet, der zugleich den Schaltungsausgang AG' bildet. Der zweite Anschluß von C2' ist mit dem Bezugspotential beschaltet.

In jeder Takthalbperiode $T_{P1}$ mit Φ1 = 0 und Φ2 = $+V_B$ oder Φ2 = $V_a$ sind die Kapazitäten C1', C1'' und C1''' einerseits über die mit Φ1 angesteuerten, leitenden P-Kanal-Schalttransistoren T5', T5'' und T5''' und andererseits über die mit $\Phi 2$ angesteuerten, leitenden N-Kanal-Schalttransistoren T6', T6'' und T6''' jeweils parallel an die Versorgungsspannung $+V_B$ angeschaltet. Dabei sind die P-Kanal-Schalttransistoren T7', T8', T8'' und T8''' jeweils gesperrt, so daß C1', C1'' und C1''' jeweils auf $+V_B$ aufgeladen werden. In jeder darauffolgenden Takthalbperiode $T_{P2}$ sind dann die Transistoren T5' bis T5''' sowie T6' bis T6''' gesperrt, während die Schalttransistoren T7' und T8' bis T8''' leitend geschaltet sind. Dabei ergibt sich eine Serienschaltung der Kapazitäten C1' bis C1''', wobei C2' auf die Summenspannung der an diesen Kapazitäten liegenden Spannungen und der Versorgungsspannung $+V_B$, d.h. auf etwa $+4 \cdot V_B$, aufgeladen wird. Über einen bei AG' angeschlossenen Verbraucher wird C2' zwar zum Teil entladen, doch wird in jeder zweiten Takthalbperiode $T_{P2}$ der hierdurch entstehende Ladungsverlust infolge der beschriebenen Aufladung auf $+4 \cdot V_B$ wieder ausgeglichen. Ganz allgemein ergibt sich bei n Schaltungsstufen der in Fig. 3 beschriebenen Art eine Spannung von $+(n+1) \cdot V_B$ am Schaltungsausgang AG'.

Die Substrate der beschriebenen P-Kanal-Schalttransistoren sind jeweils auf das Potential der Versorgungsleitung 5 gelegt, was in Fig. 3 aus Gründen einer übersichtlichen Darstellung nicht berücksichtigt wurde. Die Substrate der N-Kanal-Schalttransistoren liegen zweckmäßigerweise auf Bezugspotential. Bei einer Realisierung der Schaltung in CMOS-Technologie wird diese beispielsweise auf einem N-leitenden Substrat aufgebaut, in das einzelne P-leitende Wannen eingefügt sind, die die Substrate der N-Kanal-Schalttransistoren bilden.

## Patentansprüche

1. Schaltung zur Spannungsvervielfachung, bei der eine Kapazität (C1) vorgesehen ist, die über erste Schalttransistoren (T5, T6) an eine Versorgungsspannungsquelle (1a) anschaltbar ist und über weitere erste Schalttransistoren (T7, T8) in Serie zu der Versorgungsspannungsquelle (1a) und zu einer Speicherkapazität (C2) schaltbar ist, welche zum Schaltungsausgang (AG) parallel liegt, und bei der ein zur Ansteuerung der ersten Schalttransistoren vorgesehener Taktspannungserzeuger (1, 4, 8, 9) bezüglich der Taktspannungsamplitude von einem der Versorgungsspannung $(V_B)$ entsprechenden Wert auf einen der Ausgangsspannung $(V_a)$ entsprechenden Wert umschaltbar ist, dadurch gekennzeichnet, daß der Taktspannungserzeuger (1, 4, 8, 9) zur Amplitudenumschaltung der die ersten Schalttransistoren ansteuernden Taktimpulsspannungen $(\Phi 1, \Phi 2)$ über eine Versorgungsleitung (5) ansteuerbar ist und daß die Versorgungsleitung (5) über einen zweiten Schalttransistor (T10) an die Versorgungsspannungsquelle (1a) und über einen dritten Schalttransistor (T9) an den Schaltungsausgang (AG) anschaltbar ist, wobei das Gate des zweiten Schalttransistors (T10) und das Gate des dritten Schalttransistors (T9) mit Ausgängen (16, 15) eines Komparators (13) verbunden sind, dessen Eingänge (14, 12) mit der Versorgungsspannungsquelle (1a) und dem Schaltungsausgang (AG) beschaltet sind.

2. Schaltung nach Anspruch 1, dadurch gekennzeichnet, daß der Taktspannungserzeuger einen Pegelumsetzer (4) enthält, der zwei jeweils aus einem P-Kanal-Schalttransistor (T2, T4) und einem zu diesem in Serie liegenden N-Kanal-Schalttransistor (T1, T3) bestehende Schaltzweige enthält, daß das Gate jeweils eines dieser Schalttransistoren (T2, T4) eines Schaltzweiges an den Knoten (6, 7) des anderen Schaltzweiges geführt ist, über den die beiden Schalttransistoren (T3, T4; T1, T2) dieses Schaltzweiges miteinander verbunden sind, und daß die beiden anderen Schalttransistoren (T1, T3) des Pegelumsetzers über ihre Gateelektroden jeweils an einen ersten (2) und einen zweiten, zu dem ersten inversen Ausgang (3) eines Rechteckspannungserzeugers (1) geschaltet sind.

3. Schaltung nach Anspruch 1 oder 2, dadurch gekennzeichnet, daß mehrere Kapazitäten (C1', C1'', C1''') vorgesehen sind, die jeweils über einen ersten Teil der ersten Schalttransistoren (T5', T6', T5'', T6'', T5''', T6''') an eine Versorgungsspannungsquelle (1a) anschaltbar sind und über einen zweiten Teil der ersten Schalttransistoren (T7', T8', T8'', T8''') in Serie zueinander und zu der Versorgungsspannungsquelle (1a) sowie zu einer Speicherkapazität (C2') schaltbar sind.

4. Schaltung nach einem der vorhergehenden Ansprüche, dadurch gekennzeichnet, daß jede Kapazität (C1) in Serie zu einem über eine erste Taktimpulsspannung $(\Phi 1)$ ansteuerbaren P-Kanal-Schalttransistor (T5) und einem N-Kanal-Schalttransistor (T6) liegt, der über eine zweite, zu der ersten inverse Taktimpulsspannung $(\Phi 2)$ ansteuerbar ist, wobei diese Serienschaltung mit der Versorgungsspannungsquelle (1a) beschaltet ist, und daß jede Kapazität (C1) weiterhin in Serie zu einem P-Kanal-Schalttransistor (T7) und einem weiteren P-Kanal-Schalttransistor (T8) liegt, die beide über die zweite Taktimpulsspannung $(\Phi 2)$ ansteuerbar sind, wobei diese letztere Serienschaltung zu der Versorgungsspannungsquelle (1a) und zu der Speicherkapazität (C2) in Serie liegt.

5. Schaltung nach einem der vorhergehenden Ansprüche, dadurch gekennzeichnet, daß die in CMOS-Technologie ausgeführt ist.

## Claims

1. Voltage multiplication circuit, in which one capacitor (C1) is provided, which is connectable via first switching transistors (T5, T6) to a supply voltage source (1a) and, via further first switching transistors (T7, T8), is connectable in series to the supply voltage source (1a) and to a storage capacitance (C2), which is located parallel to the circuit output (AG), and in which a clock voltage generator (1, 4, 8, 9), which is provided to trigger the first switching transistors, can be switched over with respect to the clock voltage amplitude from a value corresponding to the supply voltage ($V_B$) to a value corresponding to the output voltage ($V_a$), characterized in that for the purpose of switching over the amplitude of the clock pulse voltages ($\Phi1$, $\Phi2$) which trigger the first switching transistors, the clock voltage generator (1, 4, 8, 9) is triggerable via a supply line (5), and in that the supply line (5) is connectable via a second switching transistor (T10) to the supply voltage source (1a) and via a third switching transistor (T9) to the circuit output (AG), thw gate of the second switching transistor (T10) and the gate of the third switching transistor (T9) being connected to outputs (16, 15) of a comparator (13), the inputs (14, 12) of which are interconnected with the supply voltage source (1a) and the circuit output (AG).

2. Circuit according to Claim 1, characterized in that the clock voltage generator contains a level converter (4) which contains two legs consisting, in each case, of a P-channel switching transistor (T2, T4) and an N-channel switching transistor (T1, T3) located in series thereto, in that the gate of in each case one of these switching transistors (T2, T4) of a leg is routed to the nodes (6, 7) of the other leg, via which the two switching transistors (T3, T4; T1, T2) of this leg are connected to one another, and in that the two other switching transistors (T1, T3) of the level converter are in each case wired via their gate electrodes to a first output (2) and a second output (3), which are inverse to the first, of a square wave voltage generator (1).

3. Circuit according to Claim 1 or 2, characterized in that a plurality of capacitors (C1', C1'', C1''') is provided which are connectable, in each case via a first part of the first switching transistors (T5', T6', T5'', T6'', T5''', T6''') to a supply voltage source (1a), and can be wired via a second part of the first switching transistors (T7', T8', T8'', T8''') in series to one another and to the supply voltage source (1a), as well as to a storage capacitance (C2').

4. Circuit according to one of the preceding claims, characterized in that each capacitor (C1) is located in series with a P-channel switching transistor (T5), which is triggerable via a firt clock pulse voltage ($\Phi1$), and with an N-channel switching transistor (T6), which is triggerable via a second clock pulse voltage ($\Phi2$) inversed to the first, this series circuit being interconnected with the supply voltage source (1a), and in that each capacitor (C1) is moreover located in series with a P-channel switching transistor (T7) and a further P-channel switching transistor (T8), which are both triggerable via the second clock pulse voltage ($\Phi2$), this last series circuit being located in series with the supply voltage source (1a) and with the storage capacitance (C2).

5. Circuit according to one of the preceding claims, characterized in that it is embodied in CMOS technology.

## Revendications

1. Circuit multiplicateur de tension comprenant une capacité (C1) susceptible d'être connectée à travers des premiers transistors de commutation (T5, T6) à une source de tension d'alimentation (1a) et à travers des premiers transistors de commutation supplémentaires (T6, T8) en série avec la source de tension d'alimentation (1a) et avec une capacité d'emmagasinage (C2), laquelle est parallèle à la sortie (AG) du circuit, de même qu'un générateur de tension de rythme (1, 4, 8, 9) prévu pour attaquer les premiers transistors de commutation et qui est commutable, pour ce qui concerne l'amplitude de la tension de rythme, d'une valeur correspondant à la tension d'alimentation ($V_B$) à une valeur correspondant à la tension de sortie ($Va$), caractérisé en ce que le générateur de tension de rythme (1, 4, 8, 9) peut être attaqué à travers une ligne d'alimentation (5) en vue de la commutation de l'amplitude des tensions pulsées de rythme ($\Phi1$, $\Phi2$) attaquant les premiers transistors de commutation et que la ligne d'alimentation (5) peut être connectée à travers un deuxième transistor de commutation (T10) à la source d'alimentation de tension (1a), et à travers un troisième transistor de commutation (T9), à la sortie (AG) du circuit, la grille du deuxième transistor de commutation (T10) et la grille du troisième transistor de commutation (T9) étant reliées aux sorties (16, 15) d'un comparateur (13) dont les entrées (14, 12) sont reliées à la source de tension d'alimentation (1a) et à la sortie (AG) du circuit.

2. Circuit selon la revendication 1, caractérisé en ce que le générateur de tension de rythme contient un convertisseur de niveau (4) qui contient deux branches de commutation, formées chacune d'un transistor de commutation à canal P (T2, T4) et d'un transistor de commutation à canal N (T1, T3) qui lui est connecté en série, que la grille d'un ce ces transistors de commutation (T2, T4) de chaque branche est reliée au nœud (6, 7) de l'autre branche, nœud par lequel les deux transistors de commutation (T3, T4; T1, T2) de cette branche sont reliés entre eux, et que les deux autres transistors de commutation (T1, T3) du convertisseur de niveau sont reliés par leurs électrodes de grille respectivement à une première sortie (2) et à une seconde sortie (3), inversée par rapport à la première, d'un générateur de tension rectangulaire (1).

3. Circuit selon la revendication 1 ou 2, caractérisé en ce qu'il comprend plusieurs capacités (C1', C1'', C1''') qui peuvent être connectées chacune à travers une première partie des premiers transistors de commutation (T5', T6', T5'', T6'', T5''', T6''') à une source de tension d'alimentation (1a) et peuvent être connectées à travers une deuxième partie des premiers transistors de commutation (T7', T8', T8'', T8''') en série entre elles et avec la source de tension d'alimentation (1a), ainsi qu'avec une capacité d'emmagasinage (C2').

4. Circuit selon une des revendications précédentes, caractérisé en ce que chaque capacité (C1) est disposée en série avec un transistor de commutation à canal P (T5), pouvant être attaqué par une première tension pulsée de rythme ($\Phi1$), et avec un transistor de commutation à canal n (T6) qui peut être attaqué par une seconde tension pulsée de rythme (Φ2), inversée par rapport à la première, le montage en série ainsi formé étant connecté à la source de tension d'alimentation (1a), et que chaque capacité (C1) est disposée, en outre, en série avec un transistor de commutation à canal P (T7) et avec un transistor de commutation à canal P supplémentaire (T8), lesquels peuvent être attaqués tous deux par la seconde tension pulsée de rythme (Φ2), le montage en série mentionné en dernier étant disposé en série avec la source de tension d'alimentation (1a) et avec la capacité d'emmagasinage (C2).

5. Circuit selon une des revendications précédentes, caractérisé en ce qu'il est réalisé en tech-nologie CMOS.

# FIG 1

EP 0 135 889 B1

# FIG 2

# FIG 3